(19) Europäisches Patentamt
European Patent Office
Office européen des brevets

(11) **EP 3 340 553 B1**

(12) **EUROPEAN PATENT SPECIFICATION**

(45) Date of publication and mention
of the grant of the patent:
**01.01.2020 Bulletin 2020/01**

(51) Int Cl.:
**H04L 25/02** *(2006.01)*

(21) Application number: **17181048.4**

(22) Date of filing: **12.07.2017**

(54) **A METHOD AND APPARATUS FOR PROVIDING A CHANNEL RESPONSE OF A CHANNEL OF INTEREST**

VERFAHREN UND VORRICHTUNG ZUR BEREITSTELLUNG EINER KANALANTWORT EINES KANALS VON INTERESSE

PROCÉDÉ ET APPAREIL PERMETTANT DE DÉTERMINER UN EMPLACEMENT D'UN POINT D'INTÉRÊT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2016 IN 201641043864**

(43) Date of publication of application:
**27.06.2018 Bulletin 2018/26**

(73) Proprietor: **Airbus Defence and Space GmbH 82024 Taufkirchen (DE)**

(72) Inventor: **SANTRA, Avik 712258 Hooghly, West Bengal (IN)**

(74) Representative: **Isarpatent
Patent- und Rechtsanwälte Behnisch Barth Charles
Hassa Peckmann & Partner mbB
Friedrichstrasse 31
80801 München (DE)**

(56) References cited:
**WO-A2-2011/007258 GB-A- 2 444 100
US-A1- 2013 065 537**

• **Florent Kadrija ET AL: "Iterative Channel Estimation in LTE Systems", Proceedings of WSA 2013, 13 March 2013 (2013-03-13), XP055448255, Retrieved from the Internet: URL:https://pdfs.semanticscholar.org/f550/ e6e0f6f9856747b5a33be40a9b31ea972738.pdf [retrieved on 2018-02-06]**
• **XUYU WANG ET AL: "CSI-based Fingerprinting for Indoor Localization: A Deep Learning Approach", ARXIV.ORG, CORNELL UNIVERSITY LIBRARY, 201 OLIN LIBRARY CORNELL UNIVERSITY ITHACA, NY 14853, 23 March 2016 (2016-03-23), XP080691446,**

**Description**

The invention relates to a method and apparatus for providing a channel response of a channel of interest, in particular for active sensing applications.

In active sensing applications, a sensing signal is transmitted through a channel of interest to a receiver to get a response signal in response to the sensing signal applied to the channel of interest. The received signal is evaluated to provide a channel response of the respective channel of interest. The investigated channel of interest can comprise a wireless or a wired channel of interest, for instance a communication channel. Further, the channel of interest can comprise one or several targets or moving objects which can be classified and/or identified using the provided or calculated channel response of the respective channel of interest. Further, the target response and/or channel response can be used for imaging of objects and/or for adaptive adjusting of a transmitted sensing signal. Accordingly, the channel response of a channel of interest can be used for a wide range of purposes and use cases. However, conventional methods for calculating a channel response of a channel of interest require extensive computation resources for performing a matrix inversion for channel estimation. The matrix inversion problem arises in any kind of active sensing applications.

A method and an apparatus for providing a channel response with an estimation accuracy acceptable over a wide range of channel conditions is known from GB 2 444 100 A (IMAGINATION TECH LTD [GB]) 28 May 2008.

Accordingly, it is an object of the present invention to provide a channel response of a channel of interest requiring less computation resources with minimum delay. This object is achieved according to a first aspect of the present invention by a method for providing a channel response of a channel of interest comprising the features of claim 1.

The invention further provides according to a further aspect an apparatus comprising the features of claim 12.

Preferred embodiments are defined by the dependent claims.

In the following, possible embodiments of the different aspects of the present invention are described in more detail with reference to the enclosed figures.

Fig. 1    shows a block diagram for illustrating a possible exemplary embodiment of a system for providing a channel response of a channel of interest according to an aspect of the present invention;

Fig. 2    shows a block diagram of a possible exemplary embodiment of a processing unit used in an apparatus to provide a channel response of a channel of interest according to a further aspect of the present invention;

Fig. 3    shows a flowchart of a possible exemplary embodiment of a method for providing a channel response of a channel of interest according to a further aspect of the present invention;

Fig. 4    shows a flowchart of a possible exemplary embodiment of a method for providing a channel response of a channel of interest;

Fig. 5    shows a flowchart of a further possible exemplary embodiment of a method for providing a channel response of a channel of interest according to an aspect of the present invention.

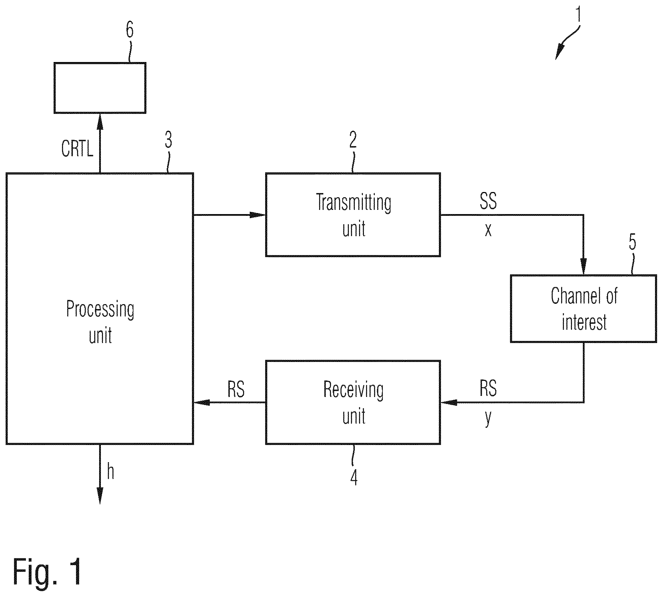

As can be seen in Fig. 1, a system 1 according to an aspect of the present invention for providing a channel response of a channel of interest can comprise a transmitting unit 2 controlled by a processing unit 3 and a receiving unit 4 adapted to receive a channel modified signal from a channel of interest 5 in response to a sensing signal generated by the transmitting unit 2 and transmitted through the channel of interest 5 to the receiving unit 4. The processing unit 3 can comprise one or several processors adapted to perform different order channel estimations on the received channel modified signal y received from the receiving unit 4 to calculate first order channel estimates of the channel response h of the channel of interest 5. The processing unit 3 is further adapted to combine the calculated first order channel estimates to calculate the channel response of said channel of interest 5. In a possible embodiment, the calculated channel response of the channel of interest 5 can be output to another data processing unit for further processing depending on the application and/or use case of the system.

The transmitting unit 2 and the receiving unit 4 can be located in a possible embodiment on the same side of the investigated channel of interest 5 as illustrated in Fig. 1. In an alternative embodiment, the transmitting unit 2 and the receiving unit 4 can be located on different sides of an investigated channel of interest 5. The channel of interest 5 can be any kind of wired or wireless channel, for instance a communication channel. Further, the channel of interest 5 can comprise one or several targets or moving objects which can be classified using the calculated channel response h. Further, the calculated channel response provided by the processing unit 3 can be used for imaging target objects within the channel of interest 5. The target objects can be moving objects such as aircrafts or vehicles or immobile objects such as buildings. The sensing signal x output by the transmitting unit 2 can comprise depending on the use case a radar signal, a sonar signal, a laser signal, a magnetic signal, a thermal signal and/or a communication signal. The sensing signal is supplied to the channel of interest 5 and the receiving unit 4 receives a channel modified signal y in response to the applied sensing signal. In a possible embodiment, the processing unit 3 can automatically generate control signals CRTL to control one or several actuators 6 in response to the calculated channel response h of the channel of interest 5. In a possible embodiment, the calculated channel response h of the channel of interest 5 can be used for an adaptive adjustment of the transmitted sensing signal x output by the transmitting unit 2. The channel response of the channel of interest 5 is calculated in a preferred embodiment continuously in real time.

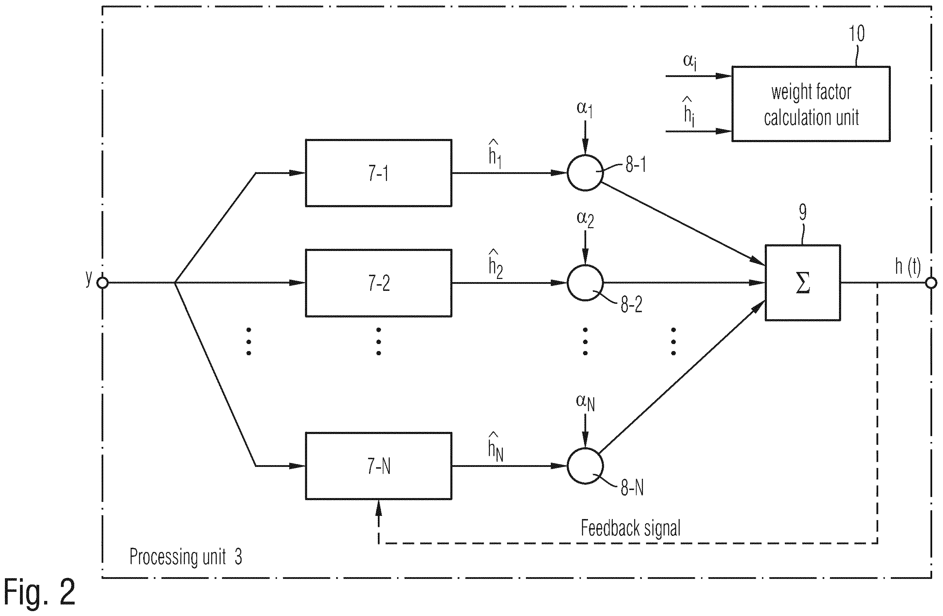

Fig. 2 shows a block diagram of a possible exemplary embodiment of a processing unit 3 used in the system 1 of Fig. 1. As illustrated in Fig. 2, the processing unit 3 is adapted to perform different first order channel estimations on the received channel modified signal y to calculate first order channel estimates $\hat{h}$ of the channel response h of the channel of interest 5. The processing unit 3 is further adapted to combine the calculated first order channel estimates $\hat{h}$ to calculate the channel response of the channel of interest 5.

In the illustrated embodiment of Fig. 2, the processing unit 3 has a signal input to receive a channel modified response signal from the receiving unit 4 wherein the channel modified response signal y is supplied to different first order channel calculation units 7-1, 7-2 ... 7-n. Each of the first order channel estimate units 7-i is adapted to calculate a first order channel estimate $\hat{h}$ of the channel response h of the channel of interest 5 and to output the calculated first order channel estimate $\hat{h}$ to an associated multiplication unit 8-i as illustrated in Fig. 2. The calculated first order channel estimates $\hat{h}$ output by the first order channel estimate calculation unit 7-i are weighted with weight factors $\alpha$ as shown in Fig. 2. The weighted first order channel estimates are supplied to an adding unit 9 which sums up the weighted first order channel estimates to calculate the channel response h of the channel of interest 5. The calculated channel response h can be output by the processing unit 3 to a further data processing unit for further processing depending on the use case. Accordingly, the processing unit 3 is adapted to calculate a linear combination of first order estimates using weight factors $\alpha$ to provide a channel response h of the channel of interest 5. The weight factors $\alpha$ used for the linear combination of the first order channel estimates can comprise in a possible embodiment constant weight factors, rule based variable weight factors and/or adaptive weight factors. In a possible embodiment, the weight factors $\alpha$ can be calculated by a weight factor calculation unit 10 of the processing unit 3 as illustrated in Fig. 2. In a possible embodiment, the weight factor calculation unit 10 receives the first order channel estimates $\hat{h}$ from the different first order channel estimate calculation unit 7-i to calculate weight factors $\alpha$-i used for weighting the output signals of the different first order channel estimate calculation units 7-i. In an alternative embodiment, the weight factors $\alpha$ can also be constant. In a specific embodiment, the constant weight factors can comprise uniform constant weight factors. In a possible embodiment, weight factors comprise rule based variable weight factors $\alpha$. These rule based variable factors can depend on measured channel parameters of the respective channel of interest 5. In a still further possible embodiment, the weight factors $\alpha$ can comprise adaptive weight factors. An adaptive weight factor used for weighting a first order channel estimate can be changed in a possible embodiment dynamically depending on a calculated deviation between the received channel modified signal y and a sensing signal matrix of the sensing signal x multiplied with the respective first order channel estimate $\hat{h}$. In a further possible embodiment, the calculated channel response h can be fed back for performing iterative first order channel estimations on the received channel modified signal y as also indicated in the embodiment of Fig. 2. In the illustrated embodiment, the output signal of the adding unit 9 forming the calculated channel response of the channel of interest 5 is fed back to some or all of the first order channel estimate calculation unit 7-i to perform iterative calculation of the first order channel estimations. First order channel estimates $\hat{h}$ can be calculated by the different first order channel estimate calculation unit 7-i using a circulant matrix approximation and/or an iterative L1 norm approximation and/or an iterative L2 norm approximation and/or a linear extrapolation and/or a template based approximation.

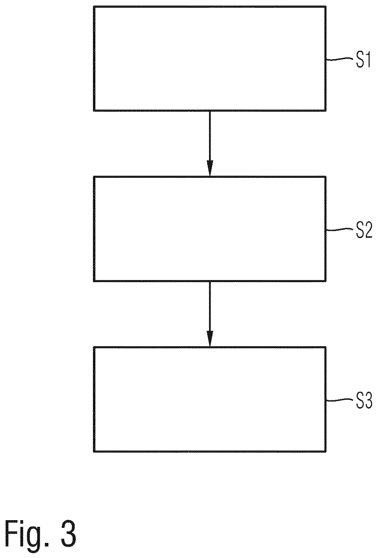

Fig. 3 shows a flowchart of a possible exemplary embodiment of a method for providing a channel response of a channel of interest such as the channel of interest 5 illustrated in Fig. 1. In the illustrated embodiment, the method comprises several steps. In a first step S1, a channel modified signal is received in response to a sensing signal transmitted through the respective channel of interest 5. In a further step S2, different first order channel estimations are performed on the received channel modified signal y to calculate first order channel estimates $\hat{h}$ of the channel response of the respective channel of interest 5. In a further step S3, the calculated first order channel estimates $\hat{h}$ are combined to calculate the channel response of the respective channel of interest 5.

The channel response h of the channel of interest 5 is calculated in a preferred embodiment of the method illustrated in Fig. 2 continuously in real time. The calculated channel response h of the channel of interest 5 can be memorized for further processing depending on the use case. Further, the calculated channel response h of the channel of interest 5 can be used for classifying and/or imaging at least one target object forming part of the respective channel of interest 5. In a still further possible embodiment, the calculated channel response of the channel of interest 5 is used for an adaptive adjustment of the transmitted sensing signal x. The transmitted sensing signal x can comprise in a possible embodiment a radar signal, a sonar signal, a laser signal, a magnetic signal, a thermal signal and/or any kind of communication signal. In a possible implementation of the method illustrated in Fig. 3, a linear combination of the first order channel estimates $\hat{h}$ can be calculated using weight factors $\alpha$ to provide the channel response h of the channel of interest 5. These weight factors $\alpha$ can comprise constant weight factors, rule based variable weight factors and/or adaptive weight factors. Depending on the calculated channel response h of the channel of interest 5 control signals CRTL can be automatically generated. The generated control signals CRTL can be used to control different kinds of actuators depending on the calculated channel response h of the channel of interest 5 which may comprise one or several target objects.

The method according to the present invention can be used for providing a channel response of a channel of interest 5 using different kinds of sensing signals. The calculated channel response of the channel of interest 5 can be used for different purposes including classifying and/or identifying targets forming part of the channel of interest 5 or imaging target objects within the channel of interest 5. Assuming that a scattering center within a distributed target or moving object forming part of the channel of interest 5 has a position $(\tau_k, f_k)$ in the delay and Doppler space and designating a backscattering cross section of the scatterer as $\sigma(\tau_k, f_k)$ and the phase of its reflection coefficient as $\theta(\tau_k, f_k)$, the received channel modified signal y from the $k^{th}$ scatterer can be expressed as:

$$\tilde{y}_k^S(t) = Re\left\{\sqrt{\sigma(\tau_k, f_k)}\, e^{j\theta(\tau_k, f_k)} x(t - \tau_k) e^{j2\pi(f_c + f_k)(t - \tau_k)}\right\} \tag{1}$$

wherein the transmitted sensing signal $f(t)$ consists of a complex baseband signal $x(t)$ modulating a carrier frequency $f_c$ and can be expressed as:

$$f(t) = Re\left\{x(t)e^{j2\pi f_c t}\right\}, \quad -\infty < t < \infty \tag{2}$$

A round trip attenuation only contributes a constant scaling of the received channel modified signal $y_k^{s,r}(t)$ and can consequently be ignored in equation (1). Further, a distortion of a complex envelope due to Doppler effects may also be ignored by the narrowband assumption of a scatterer center. On accumulating return signals from K scatterers in the distributed target, the channel modified received signal y can be expressed as:

$$\tilde{y}^S(t) = \sum_{k=1}^{K} \tilde{y}_k^S(t)$$

$$= Re\left\{\sum_{k=1}^{K} \sqrt{\sigma(\tau_k, f_k)}\, e^{j\theta(\tau_k, f_k)} x(t - \tau_k) e^{j2\pi(f_c + f_k)(t - \tau_k)}\right\} \tag{3}$$

The complex envelope of the baseband version of the received channel modified signal $y^{s,r}(t)$ can be expressed as:

$$y^{s,r}(t) = \sum_{k=1}^{K} \sqrt{\sigma(\tau_k, f_k)}\, e^{j\theta(\tau_k, f_k)} x(t - \tau_k) e^{j2\pi f_k(t - \tau_k)} \tag{4}$$

By ignoring constant rotation terms, the received channel modified signal y can be expressed in a compact manner as follows:

$$y(t) = h(t) * x(t) + c(t) * x(t) + z(t) \tag{5}$$

wherein * denotes a convolution operation, and wherein $h(t) = \sqrt{\sigma(\tau_k, f_k)} e^{j\theta(\tau_k, f_k)} e^{j2\pi f_k(t - \tau_k)}$ represents a distributed range-spread target. Further, a clutter response c(t) at a baseband is modelled as a complex Gaussian random process with zero mean possessing a covariance $K_c(t-u)$ and corresponding power spectral density $\Phi_c(f)$. Further,

the receiver noise signal $z(t)$ is a complex Gaussian with zero mean and comprises a covariance function $K_z(t-u)$ with a power spectral density $\Phi_Z(f)$. Both the clutter and noise processes of the channel can be assumed to be covariance stationary.

A transmitter receiver model of the received channel modified signal can be expressed in matrix-vector form as follows:

$$\underline{y} = X\underline{h} + X\underline{c} + \underline{z}$$

(6)

wherein $X$ is the convolution matrix representing the transmitted signal, and $N$ is the number of samples representing the pulse width of the transmitted signal, given as:

$$X = \begin{bmatrix} x(1) & 0 & \dots & 0 \\ x(2) & x(1) & 0 & \dots \\ \vdots & \vdots & \ddots & \\ \dots & x(N) & & x(1) \end{bmatrix} \epsilon\ C^{NxN}$$

(7)

The target vectors h and the clutter vector c can be expressed as follows:

$$\underline{h} = [h(1) \quad \dots \quad h(L) \quad 0]^T \epsilon\ C^{Nx1}$$

$$\underline{c} = [c(1) \quad c(2) \quad \dots \quad c(N)]^T \epsilon\ C^{Nx1}$$

(8)

The target vector h represents a sparse but locally dense target or a channel response with only $L\ (L \ll N)$ non-zero entries. The clutter vector c represents the self-interference environment noise. To reconstruct the target vector h from the received vector $\underline{y}$ a target linear inversion can be performed using matrix inversion. In a conventional method for providing a channel response, the target inverse requires a matrix inversion, which may be implemented by Choleksy factorization, QR-factorization, $LDL^T$ factorization or SVD factorization. However the time-complexity of such conventional algorithms are in the order of $O(N^3)$ requiring many computational resources and making them computationally infeasible on a hardware platform for large matrices which may be encountered in many scenarios and/or use cases. Accordingly, the method for providing a channel response of a channel of interest 5 avoids such a matrix inversion requiring huge computation resources and causing time delays in providing the channel response of the channel of interest 5. The processing unit 3 as used by the system 1 as illustrated in Figs. 1, 2 comprises a low complexity and can be implemented in a possible embodiment on a hardware platform. The method according to the present invention uses first order channel estimates calculated by first order channel estimate calculation units 7-i. The first order channel estimate calculation units 7-i can calculate the first order channel estimates $\hat{h}$ using different algorithms. In a possible embodiment, the first order channel estimates $\hat{h}$ are calculated using a circulant matrix approximation, an iterative L1 norm approximation, an iterative L2 norm approximation, a linear extrapolation and/or a template based approximation. Depending on the use case, different kinds of first order channel estimation processes can be implemented. In a possible implementation, different first order channel estimate calculation units 7-i can be activated or deactivated depending on an operation mode of the processing unit 3.

In a specific embodiment, the processing unit 3 may comprise five different first order channel estimate calculation units 7-i performing different kinds of first order channel estimation algorithms. These first order channel estimation algorithms can be iterative or non-iterative.

In a possible implementation, a first order channel estimate can be calculated using a circulant matrix approximation.

It can be observed that a linear convolution operation between a target of the channel of interest 5 and the transmitted sensing signal x(t)*h(t) leads to a Sylvester's channel target matrix which can comprise a Toeplitz structure and can be expressed as follows:

$$X = \begin{bmatrix} x(1) & 0 & ... & 0 & 0 \\ x(2) & x(1) & 0 & ... & 0 \\ \vdots & \vdots & \ddots & & \vdots \\ x(N-1) & x(N-2) & ... & x(1) & 0 \\ x(N) & x(N-1) & x(N-2) & ... & x(1) \end{bmatrix} \epsilon\ C^{NxN}$$

$$(9)$$

The sensing signal matrix X in the time domain can be expressed as follows:

$$X = \begin{bmatrix} x(1) & x(N) & ... & x(3) & x(2) \\ x(2) & x(1) & x(N) & ... & x(3) \\ \vdots & \vdots & \ddots & & \vdots \\ x(N-1) & x(N-2) & ... & x(1) & x(N) \\ x(N) & x(N-1) & x(N-2) & ... & x(1) \end{bmatrix}$$
$$- \begin{bmatrix} 0 & x(N) & ... & x(3) & x(2) \\ 0 & 0 & x(N) & ... & x(3) \\ \vdots & \vdots & \ddots & & \vdots \\ 0 & 0 & ... & 0 & x(N) \\ 0 & 0 & 0 & ... & 0 \end{bmatrix}$$
$$= X_c - X_r$$

$$(10)$$

wherein $X_c$ is a circulant matrix and has the property that it can be diagnosed using an FFT matrix which means:

$$X_c = \begin{bmatrix} x(1) & x(N) & ... & x(3) & x(2) \\ x(2) & x(1) & x(N) & ... & x(3) \\ \vdots & \vdots & \ddots & & \vdots \\ x(N-1) & x(N-2) & ... & x(1) & x(N) \\ x(N) & x(N-1) & x(N-2) & ... & x(1) \end{bmatrix} = F \begin{bmatrix} x_f(1) & 0 & ... & 0 & 0 \\ 0 & x_f(2) & 0 & ... & 0 \\ \vdots & \vdots & \ddots & & \vdots \\ 0 & 0 & ... & x(N-1) & 0 \\ 0 & 0 & 0 & ... & x_f(N) \end{bmatrix} F^H$$

$$(11)$$

wherein $[x_f(1),x_f(2), ...x_f(N)]$ represents a frequency domain signal of the transmitted sensing signal $[x(1)\ x(2) ... x(N)]$, i.e. $[x_f(1),x_f(2),...x_f(N)]^T = F[x(1)\ x(2) ... x(N)]^T$, and wherein $X_r$ represents a residual matrix.
Now, the received channel modified signal can be transformed as below:

$$\tilde{y} = F^H y = (\Lambda - F^H X_h F)F^H h + F^H(Xc + z)$$

$$(12)$$

Accordingly, a first order channel estimate can be expressed as:

$$\hat{h}_1 = Fg(\Lambda^{-1} \tilde{y})$$

$$(13)$$

wherein F is a DFT matrix and $g$ is a non-linear windowing function applied to a target impulse response to ensure a smooth decay of the response to 0. The non-linear windowing function g can be a rectangular window, a Hanning window, a cosine window, etc. Following the inverse Fourier transform, a truncation operation is applied to limit a spread of the target/channel impulse response to a maximum possible spread of the target $N_h$, which may be either known by the maximum length of targets being estimated, detected or tracked or estimated a priori through for instance Akaike Information Criteria, Bayesian Information Criteria, etc. The truncation operation can be expressed as follows:

$$Q\{\underline{h}\} = \begin{cases} \underline{h} & if\ n \le N_h \\ 0 & else \end{cases}$$

$$(14)$$

In a still further possible embodiment of the method and apparatus 1 according to the present invention, a first order channel estimate can be calculated by an iterative L1 norm approximation.

First-order methods for a LASSO formulation are descendants of classical projected gradient algorithms. An update rule of a stochastic gradient algorithm for smooth, continuous convex function $f()$ is given as:

$$\underline{h}^{k+1} = \underline{h}^k - \alpha^k \nabla f(\underline{h}^k)$$

$$(15)$$

wherein $\alpha^k > 0$ is a step-size and $\nabla f(\underline{h}^k)$ is a Newton direction defined at iteration k. The stochastic gradient iteration can be viewed as proximal regularization by Taylor expanding the linearized function f(.) at $\underline{h}^k$ as:

$$f(\underline{h}) = f(\underline{h}^k) + (\underline{h} - \underline{h}^k)^T \nabla f(\underline{h}^k) + \frac{1}{2} \left\| \underline{h} - \underline{h}^k \right\|_2^2 \nabla^2 f(\underline{h}^k)$$

$$(16)$$

By using algebraic modification, the proximal regularization iteration after ignoring constant terms can be expressed as:

$$\underline{h}^{k+1} = \arg \min_{\underline{h}} \left\{ \left\| \underline{h} - (\underline{h}^k - \alpha^k \nabla f(\underline{h}^k)) \right\|_2^2 \right\}$$

$$(17)$$

For an unconstrained optimization problem

$$\underline{h}^* = \arg \min_{\underline{h}} F(\underline{h}) = \arg \min_{\underline{h}} \frac{1}{2} \left\| \underline{y} - X\underline{h} \right\|_2^2 + \lambda \left\| \underline{h} \right\|_1^2$$

$$(18)$$

observing the fact that $\|\underline{h}\|_1$ is a separable function, the proximal regularization can thus be written as follows:

$$\underline{h}^{k+1} = \arg \min_{\underline{h}} \{ \left\| \underline{h} - \left( \underline{h}^k - \alpha^k \nabla f(\underline{h}^k) \right) \right\|_2^2 + \lambda \left\| \underline{h} \right\|_1 \}$$

$$(19)$$

This can be solved by a so-called shrinkage of soft-thresholding operators given as:

$$\mathrm{T}\left( \underline{h}^k - \alpha^k \nabla f(\underline{h}^k), \lambda \alpha^k \right)$$
$$= \begin{cases} sgn \left( \underline{h}^k - \alpha^k \nabla f(\underline{h}^k) \right) \left( \left| \underline{h}^k - \alpha^k \nabla f(\underline{h}^k) \right| - \lambda \alpha^k \right) & \left| \underline{h}^k - \alpha^k \nabla f(\underline{h}^k) \right| > 0 \\ 0 & o.w. \end{cases}$$

$$(20)$$

A Lipschitz continuous gradient of $\nabla f$ is defined as:

$$\left\| \nabla \mathrm{f}(\underline{x}) - \nabla \mathrm{f}(\underline{y}) \right\| \leq L(\nabla f) \left\| \underline{x} - \underline{y} \right\| \quad \forall \, \underline{x}, \underline{y}$$

$$(21)$$

For $f(\underline{h}) = \left\| \underline{y} - X\underline{h} \right\|_2^2$, the Lipschitz constant of the gradient $\nabla f(\underline{h})$ is given as $2\lambda_{max}(X^T X)$. Alternatively, for other optimization functions computing the Lipschitz constant can be computationally expensive. Accordingly, iterative approximation techniques can be used. Alternatively, a step-size is proposed to be computed from function $f()$ through a Barzilai-Borwein equation:

$$\alpha^k = \arg \min_{\alpha} \left\| \alpha \left( \underline{h}^k - \underline{h}^{k-1} - \left( \nabla f(\underline{h}^k) - \nabla f(\underline{h}^{k-1}) \right) \right) \right\|_2^2$$
$$= \frac{\left( \underline{h}^k - \underline{h}^{k-1} \right)^T \left( \nabla f(\underline{h}^k) - \nabla f(\underline{h}^{k-1}) \right)}{\left\| \underline{h}^k - \underline{h}^{k-1} \right\|_2^2}$$

$$(22)$$

Using the projected gradient formulation, the following iterative model can be developed:

$$\hat{\underline{h}}^{k+1} = \min_{\underline{h}} f(\underline{h}^k) + \nabla f(\underline{h}^k)^T (\underline{h} - \underline{h}^k) + (L(\nabla f)/2) ||\underline{h} - \underline{h}^k||\_2\wedge 2 + g(\underline{h})$$

$$(23)$$

It can be shown that the function value of the above re-formulated problem is greater than the original problem $f(\underline{h}) + g(\underline{h})$ for all values of $\underline{h}^k, \underline{h}$.

In a still further possible embodiment of the method and apparatus 1 according to the present invention, the first order channel estimates can be calculated using an iterative L2 norm approximation.

For mean square error criteria, the solution $\hat{h} = (X^H X)^{-1} X^H \underline{y}$ is given in closed form. For more general and elaborate criteria, such closed form solutions are not possible. In this case, it becomes necessary to resort to an iterative procedure in order to approximate the solution.

A general procedure of the stochastic steepest-descent algorithm has the following form:

$$\hat{h}_i = \hat{h}_{i-1} + \mu p_i$$

$$(24)$$

wherein $\hat{h}_i$ is the updated estimate at iteration $i$, $\hat{h}_{i-1}$ is the estimate at iteration $i$ - 1, vector $p_i$ is an update direction and $\mu$ is a step-size parameter that provides convergence.

An $\varepsilon$ -NLMS algorithm is given by the following recursive update rule:

$$\underline{\hat{h}}_i = \underline{\hat{h}}_{i-1} + \mu\left(\epsilon I + \underline{x}_i\underline{x}_i^*\right)^{-1}\underline{x}_i\left(y(i) - \underline{x}_i^*\underline{\hat{h}}_{i-1}\right)$$

$$(25)$$

which can be reduced to:

$$=> \underline{\hat{h}}_i = \underline{\hat{h}}_{i-1} + \frac{\mu}{\epsilon + \left|\left|x_i\right|\right|^2}\underline{x}_i\left(y(i) - \underline{x}_i^*\underline{\hat{h}}_{i-1}\right), \qquad \forall\, i$$

$$(26)$$

From the least perturbation theory, the following condition on the step-size is given as:

$$0 < \mu < \frac{2\left(\epsilon + \left|\left|x_i\right|\right|^2\right)}{\left|\left|x_i\right|\right|^2} \;\; \forall\, i$$

In a still further possible embodiment of the method according to the first aspect of the present invention, the first order channel estimate can be calculated using a linear extrapolation or predictive method.

The estimates from a previous cycle or phase can be used as the estimate for this method. In the context of an active sensing application, the channel/target estimation from an earlier pulse can be used after a non-linear deterministic operation to account for range alignment and motion compensation. In the context of communication systems, it is the coarse channel estimates which have been estimated from previous frames and fed in this frame after accounting from phase adjustments. The estimates from this implemented process can be expressed as:

$$\underline{\hat{h}}_4(t + 1) = p(\widehat{\underline{h}_4}(t))$$

$$(27)$$

wherein p(.) is the operator that takes care of the deterministic range alignment and motion/phase compensation. For the first pulse/cycle, the estimates from this process are not available and can be ignored.

In a still further possible embodiment of the method and apparatus 1 according to the present invention, the first order channel estimate can be calculated using a template based approximation.

With the advent of cognitive systems, there is an ever-increasing push towards intelligent systems with a memory. In the context of active sensing applications, this implies an environmental dynamic database, where the history of past encountered targets within the channel of interest 5 is recorded. The estimates calculated by this first order channel estimate process can be taken as the response of the target or channel which closely matches a record in the database from an earlier pulse/cycle. This means that the target/channel estimate from the present pulse is passed to a kNN (k-Nearest Neighbor) classifier to identify the closely matching target response or channel response from the database, which can be used in the subsequent pulse/cycle as an estimate. In this case, k=1, however k can be up to N which essentially translates to k different estimates using this first order channel estimation process.

The processing unit 3 of the apparatus 1 as illustrated in Fig. 2 can calculate a final estimate of the target or a channel response by combining the first order estimates from the different first order channel estimate calculation units 7-i as illustrated in Fig. 2. In a possible embodiment, a linear combination is calculated to achieve the final estimate of the channel response of the channel of interest 5.

$$\hat{h} = \sum_{i=1}^{N} \alpha_i \underline{\hat{h}}_i$$

(28)

The weights $\alpha$ used for the linear formation can comprise constant weight factors, rule based variable weight factors or adaptive weight factors. If, for instance five different first order channel estimations are used (N=5) each constant uniform weight factor $\alpha$ can be 1/5. Other weighting factors are possible. Depending on different operation modes and/or use cases, the different weight factors $\alpha_i$ can be varied under control of the weight factor calculation unit 10 as illustrated in Fig. 2. In a possible embodiment, some of the implemented first order channel estimation calculation units 7-i can be activated or deactivated depending on a control input and/or an operation mode of the system 1.

In a possible embodiment, rule based variable weight factors can be used. The weight factors can depend in this embodiment on the operating environment and/or use case. For instance, a very high input measured SINR and fast fluctuating targets and/or channels, for instance a channel of interest 5 with moving target objects, may increase the weight factor $\alpha1$ used for the first order channel estimate output by the calculation unit 7-1. Further, weighting factor $\alpha3$ for iterative L2 norm approximation may be increased in this situation. Further, weighting factors for the fourth and fifth first order channel estimations, i.e. for linear extrapolation and/or template based approximation, might be decreased in this example.

Further, at a very high input SINR and slow fluctuating targets, weighting factors $\alpha1$, $\alpha2$ might be increased and weight factor $\alpha5$ for template based approximation might be reduced.

In a further possible embodiment, at a very low input SINR, a weighting factor $\alpha5$ for a first order channel estimate process, e.g. template based approximation, might be increased and the weighting factors of the other first order channel estimate processes, e.g. weighting factors $\alpha1$ to $\alpha4$ can be reduced.

At medium input SINR and fast fluctuating targets, more weights can be distributed on methods 2, 3 and 5 by increasing the weight factors $\alpha2$, $\alpha3$ and $\alpha5$ for iterative L1 norm approximation, iterative L2 norm approximation and template based approximation, respectively, whereas the remaining first order channel estimation processes are less weighted by reducing weight factors $\alpha1$ and $\alpha4$.

At medium input SINR and slow fluctuating targets, more weight can be distributed for instance on the first order channel estimate processes comprising an iterative L1 norm approximation, an iterative L2 norm approximation, a linear extrapolation and a template based approximation, whereas less weight is distributed on circulant matrix approximation by reducing weight factor $\alpha1$.

The fine tuning of the weight factors $\alpha$ can also be performed using a feedback signal of the calculated channel response of the channel of interest 5.

In a possible embodiment, the weight factors $\alpha$ comprise adaptive weight factors.

In a possible embodiment, a weight factor $\alpha_k$ can be calculated as follows:

$$\alpha_k = \frac{\exp\left(-\left\|\underline{y} - X\underline{h}_k\right\|_2^2\right)}{\sum_{i=1}^{5} \exp\left(-\left\|\underline{y} - X\underline{h}_i\right\|_2^2\right)}$$

(29)

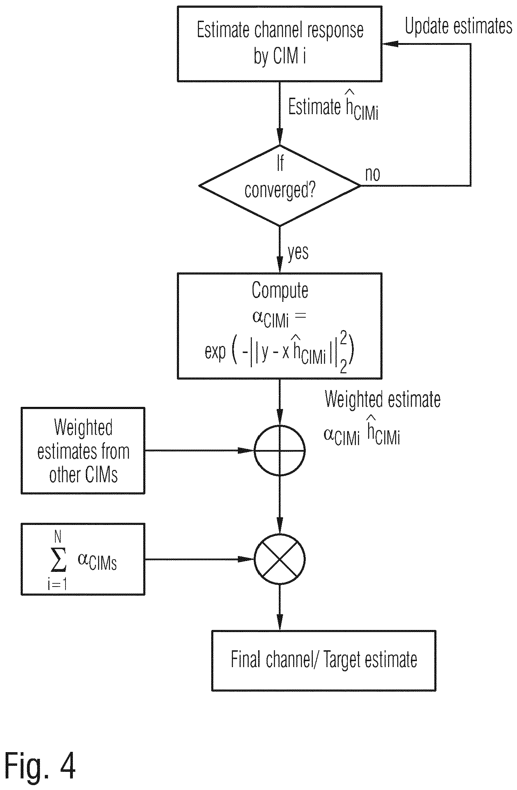

Fig. 4 shows a flowchart of a possible exemplary embodiment of a method for providing a channel response h of a channel of interest 5.

In the illustrated embodiment, a first order channel estimate $\hat{h}$ is calculated and it is checked whether there is convergence. If there is no convergence the estimate is updated as illustrated in Fig. 4. In a further step, a weight factor is computed and adapted. The adaptive weight factor is then used for weighting estimates from other CIMs. Finally, a normalization is performed to calculate the final channel/target estimate of the channel of interest 5.

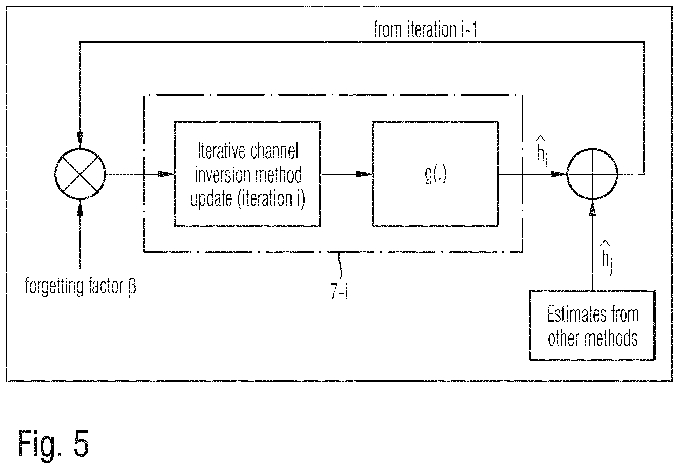

Fig. 5 shows a further diagram for illustrating a possible alternative architecture. The method according to the present invention aggregates various first order approximate results $\hat{h}$ to provide an enhanced channel response h of the channel of interest 5. Whereas a closed form solution of an inversion problem comprises a computational complexity of $O(N^3)$, the method according to the present invention achieves a similar performance with a reduced complexity of $O(N)$. In the embodiment illustrated in Fig. 5, a first order channel estimate calculation algorithm is used to calculate a first order channel estimate $\hat{h}$ of the channel response h of the channel of interest. In the illustrated embodiment of Fig.

5, the first order channel estimation process is iterative providing a first order channel estimate which can be weighted by a weighting factor using estimates from other first order channel estimation processes wherein the calculated final estimate from iteration i-1 is fed back to provide an iterative channel inversion process update. The estimate from iteration i-1 can in a possible embodiment be multiplied with an optional forgetting factor $\beta$ as illustrated in Fig. 5.

The method for providing a channel response h of a channel of interest 5 can be used in a wide variety of technical fields ranging from communication systems to active sensing systems. For real-time application, there is a need for accurate, low complexity inversion techniques. The method and apparatus 1 according to the present invention uses different channel inversion identification techniques and combines and/or aggregates several first order approximation algorithms with low complexity to provide an enhanced system performance and to provide precise calculation of a channel response h of a channel of interest 5.

For a cognitive system, an interrogation phase requires transmission of standard pulses to probe and/or estimate target parameters of a target within a channel of interest 5. The estimated target parameters can be used in subsequent pulses of the transmitted sensing signal for illuminating a target environment. For the interrogation phase, the channel/target inversion can be addressed by storing a LFM matrix inverse offline and by applying the same on the received data. However, for the matched illumination or adaptive waveform pulse since the transmit waveform can be arbitrary, a channel/target inversion in this phase requires a matrix inversion on the fly when using a conventional approach. This can be extremely challenging in terms of computational complexity in a conventional system. Accordingly, the present invention provides a method and apparatus allowing to calculate a channel response h of a channel of interest 5 with low calculation complexity. In order to compare a performance of the target estimation techniques one can use a metric of Normalized Mean Square Error NMSE which may be defined as follows:

$$NMSE = 10 log 10 \left( \frac{\left\| |H(f) - \widehat{H}(f)| \right\|^2}{\left\| |\underline{H(f)}| \right\|^2} \right)$$

$$(30)$$

In a possible embodiment, the method and apparatus 1 according to the present invention can be implemented in a low complexity receiver for channel identification of a channel of interest 5. The receiver can comprise a receiving unit 4 and a processing unit 3 as illustrated in Fig. 1. In a possible implementation, the receiver can also comprise a transmitting unit 2 for transmitting a sensing signal to the channel of interest 5. In an alternative embodiment, the transmitting unit 2 can be remote and located on the other side of the channel of interest 5.

**Claims**

1. A method for providing a channel response, h, of a channel of interest (5) comprising the steps of:

　　(a) Receiving (S1) a channel modified signal in response to a sensing signal, transmitted through said channel of interest (5);
　　(b) Performing (S2) different first order channel estimations on the received channel modified signal to calculate first order channel estimates, $\hat{h}$, of the channel response, h, of said channel of interest (5) without performing a matrix inversion; and
　　(c) Combining (S3) the calculated first order channel estimates, $\hat{h}$, to calculate the channel response, h, of said channel of interest (5), wherein a linear combination of the first order channel estimates, $\hat{h}$, is calculated using weight factors, $\alpha$, to provide the channel response, h, of said channel of interest (5).

2. The method according to claim 1, wherein the weight factors, $\alpha$, used for the linear combination of the first order channel estimates, $\hat{h}$, comprise constant weight factors, rule based variable weight factors or adaptive weight factors.

3. The method according to claim 2, wherein the constant weight factors comprise uniform constant weight factors.

4. The method according to claim 2, wherein the rule based variable weight factors depend on measured channel parameters of said channel of interest (5).

5. The method according to claim 2, wherein an adaptive weight factor used for weighting a first order channel estimate is changed dynamically depending on a calculated deviation between the received channel modified signal and a sensing signal matrix (X) of the sensing signal multiplied with the respective first order channel estimate (h).

6. The method according to claim 1, wherein the calculated channel response, h, of said channel (5) of interest is fed back for performing iterative first order channel estimations on the received channel modified signal.

7. The method according to any of the preceding claims 1 to 6, wherein the first
order channel estimates, $\hat{h}$, are calculated using
a circulant matrix approximation and/or
an iterative L1 norm approximation and/or
an iterative L2 norm approximation and/or
a linear extrapolation and/or
a template based approximation.

8. The method according to any of the preceding claims 1 to 7, wherein the transmitted sensing signal comprises
a radar signal,
a sonar signal,
a laser signal,
a magnetic signal,
a thermal signal and/or
a communication signal.

9. The method according to any of the preceding claims 1 to 8, wherein the calculated channel response, h, of said channel of interest (5) is used for adaptive adjustment of the transmitted sensing signal.

10. The method according to any of the preceding claims 1 to 9, wherein the calculated channel response, h, of said channel of interest (5) is used for classifying and/or imaging at least one target object forming part of said channel of interest (5).

11. The method according to any of the preceding claims 1 to 10, wherein the channel response, h, of said channel of interest (5) is calculated continuously in real time.

12. An apparatus configured to provide a channel response, h, of a channel of interest (5) on the basis of a channel modified signal received by said apparatus from the channel of interest (5) in response to a predetermined sensing signal transmitted through said channel of interest (5) to said apparatus,
said apparatus comprising a processing unit (3) adapted to perform different first order channel estimations on the received channel modified signal to calculate first order channel estimates, $\hat{h}$, of said channel response, h, of said channel of interest (5) without performing a matrix inversion and adapted to combine the calculated first order channel estimates, $\hat{h}$, to calculate the channel response, h, of said channel of interest (5), wherein a linear combination of the first order channel estimates, $\hat{h}$, is calculated using weight factors, $\alpha$, to provide the channel response, h, of said channel of interest (5).

13. The apparatus according to claim 12, wherein the sensing signal comprises a radar signal, a sonar signal, a laser signal, a magnetic signal, a thermal signal and/or a communication signal.

**Patentansprüche**

1. Verfahren zur Bereitstellung einer Kanalantwort h eines Kanals von Interesse (5), umfassend die folgenden Schritte:

(a) Empfangen (S1) eines kanalmodifizierten Signals in Reaktion auf ein Messsignal, das durch den Kanal von Interesse (5) gesendet wird;
(b) Durchführen (S2) verschiedener Kanalschätzungen erster Ordnung am empfangenen kanalmodifizierten Signal, um Kanalschätzungen erster Ordnung $\hat{h}$ der Kanalantwort h des Kanals von Interesse (5) ohne Durchführen einer Matrixinversion zu berechnen; und
(c) Kombinieren (S3) der berechneten Kanalschätzungen erster Ordnung $\hat{h}$, um die Kanalantwort h des Kanals von Interesse (5) zu berechnen, wobei eine lineare Kombination der Kanalschätzungen erster Ordnung $\hat{h}$ unter Verwendung von Gewichtsfaktoren $\alpha$ berechnet wird, um die Kanalantwort h des Kanals von Interesse (5) bereitzustellen.

2.  Verfahren nach Anspruch 1, wobei die Gewichtsfaktoren $\alpha$, die für die lineare Kombination der Kanalschätzungen erster Ordnung $\hat{h}$ verwendet werden, konstante Gewichtsfaktoren, regelbasierte variable Gewichtsfaktoren oder adaptive Gewichtsfaktoren umfassen.

3.  Verfahren nach Anspruch 2, wobei die konstanten Gewichtsfaktoren einheitliche konstante Gewichtsfaktoren umfassen.

4.  Verfahren nach Anspruch 2, wobei die regelbasierten variablen Gewichtsfaktoren von gemessenen Kanalparametern des Kanals von Interesse (5) abhängen.

5.  Verfahren nach Anspruch 2, wobei ein adaptiver Gewichtsfaktor, der zum Gewichten einer Kanalschätzung erster Ordnung verwendet wird, in Abhängigkeit von einer berechneten Abweichung zwischen dem empfangenen kanalmodifizierten Signal und einer Messsignalmatrix (X) des Messsignals multipliziert mit der jeweiligen Kanalschätzung erster Ordnung ($\underline{h}$) dynamisch geändert wird.

6.  Verfahren nach Anspruch 1, wobei die berechnete Kanalantwort $h$ des Kanals von Interesse (5) zum Durchführen iterativer Kanalschätzungen erster Ordnung am empfangenen kanalmodifizierten Signal rückgeführt wird.

7.  Verfahren nach einem der vorhergehenden Ansprüche 1 bis 6, wobei die Kanalschätzungen erster Ordnung $\hat{h}$ berechnet werden unter Verwendung von:

    einer zirkulanten Matrix-Approximation und/oder
    einer iterativen L1-Norm-Approximation und/oder
    einer iterativen L2-Norm-Approximation und/oder
    einer linearen Extrapolation und/oder
    einer vorlagenbasierten Approximation.

8.  Verfahren nach einem der vorhergehenden Ansprüche 1 bis 7, wobei das gesendete Messsignal umfasst:

    ein Radarsignal,
    ein Sonarsignal,
    ein Lasersignal,
    ein magnetisches Signal,
    ein thermisches Signal und/oder
    ein Kommunikationssignal.

9.  Verfahren nach einem der vorhergehenden Ansprüche 1 bis 8, wobei die berechnete Kanalantwort $h$ des Kanals von Interesse (5) zur adaptiven Anpassung des gesendeten Messsignals verwendet wird.

10. Verfahren nach einem der vorhergehenden Ansprüche 1 bis 9, wobei die berechnete Kanalantwort h des Kanals von Interesse (5) zum Klassifizieren und/oder Abbilden mindestens eines Zielobjekts verwendet wird, das zum Kanal von Interesse (5) gehört.

11. Verfahren nach einem der vorhergehenden Ansprüche 1 bis 10, wobei die Kanalantwort h des Kanals von Interesse (5) kontinuierlich in Echtzeit berechnet wird.

12. Vorrichtung, die so konfiguriert ist, dass sie eine Kanalantwort $h$ eines Kanals von Interesse (5) auf der Basis eines kanalmodifizierten Signals bereitstellt, das durch die Vorrichtung vom Kanal von Interesse (5) in Reaktion auf ein vorbestimmtes Messsignal empfangen wird, das durch den Kanal von Interesse (5) an die Vorrichtung gesendet wird, wobei die Vorrichtung eine Verarbeitungseinheit (3) umfasst, die zum Durchführen verschiedener Kanalschätzungen erster Ordnung an dem empfangenen kanalmodifizierten Signal ausgelegt ist, um Kanalschätzungen erster Ordnung $\hat{h}$ der Kanalantwort h des Kanals von Interesse (5) ohne Durchführen einer Matrixinversion zu berechnen, und zum Kombinieren der berechneten Kanalschätzungen erster Ordnung $\hat{h}$ ausgelegt ist, um die Kanalantwort h des Kanals von Interesse (5) zu berechnen, wobei eine lineare Kombination der Kanalschätzungen erster Ordnung $\hat{h}$ unter Verwendung von Gewichtfaktoren $\alpha$ berechnet wird, um die Kanalantwort $h$ des Kanals von Interesse (5) bereitzustellen.

**13.** Vorrichtung nach Anspruch 12,
wobei das Messsignal umfasst:
ein Radarsignal, ein Sonarsignal, ein Lasersignal, ein magnetisches Signal, ein thermisches Signal und/oder ein Kommunikationssignal.

**Revendications**

**1.** Procédé permettant de fournir une réponse de canal, h, d'un canal d'intérêt (5), comprenant les étapes consistant à :

(a) recevoir (S1) un signal modifié selon le canal en réponse à un signal de détection, transmis sur ledit canal d'intérêt (5);
(b) effectuer (S2) différentes estimations de canal de premier ordre sur le signal modifié selon le canal reçu pour calculer des premières estimations de canal de premier ordre, $\hat{h}$, de la réponse de canal, h, dudit canal d'intérêt (5) sans procéder à une inversion de matrice ; et
(c) combiner (S3) les premières estimations de canal de premier ordre, $\hat{h}$, calculées pour calculer la réponse de canal, h, dudit canal d'intérêt (5), une combinaison linéaire des premières estimations de canal de premier ordre, $\hat{h}$, étant calculée en utilisant des facteurs de pondération, $\alpha$, pour fournir la réponse de canal, h, dudit canal d'intérêt (5).

**2.** Procédé selon la revendication 1, dans lequel les facteurs de pondération, $\alpha$, utilisés pour la combinaison linéaire des premières estimations de canal de premier ordre, $\hat{h}$, comprennent des facteurs de pondération constants, des facteurs de pondération variables à base de règles ou des facteurs de pondération adaptatifs.

**3.** Procédé selon la revendication 2, dans lequel les facteurs de pondération constants comprennent des facteurs de pondération constants uniformes.

**4.** Procédé selon la revendication 2, dans lequel les facteurs de pondération variables à base de règles dépendent de paramètres de canal mesurés dudit canal d'intérêt (5).

**5.** Procédé selon la revendication 2, dans lequel un facteur de pondération adaptatif utilisé pour pondérer une estimation de canal de premier ordre est modifié de manière dynamique en fonction d'un écart calculé entre le signal modifié selon le canal reçu et une matrice de signal de détection (X) du signal de détection multiplié par l'estimation de canal de premier ordre (h) respective.

**6.** Procédé selon la revendication 1, dans lequel la réponse de canal, h, calculée dudit canal d'intérêt (5) est renvoyée pour effectuer des estimations de canal de premier ordre itératives sur le signal modifié selon le canal reçu.

**7.** Procédé selon l'une quelconque des revendications précédentes 1 à 6, dans lequel les estimations de canal de premier ordre, $\hat{h}$, sont calculées en utilisant
une approximation par matrice circulante, et/ou
une approximation par norme L1 itérative, et/ou
une approximation par norme L2 itérative, et/ou
une extrapolation linéaire, et/ou
une approximation à base de modèles.

**8.** Procédé selon l'une quelconque des revendications précédentes 1 à 7, dans lequel le signal de détection transmis comprend
un signal radar,
un signal sonar,
un signal laser,
un signal magnétique,
un signal thermique, et/ou
un signal de communication.

**9.** Procédé selon l'une quelconque des revendications précédentes 1 à 8, dans lequel la réponse de canal, h, calculée dudit canal d'intérêt (5) est utilisée pour un ajustement adaptatif du signal de détection transmis.

**10.** Procédé selon l'une quelconque des revendications précédentes 1 à 9, dans lequel la réponse de canal, h, calculée dudit canal d'intérêt (5) est utilisée pour classifier et/ou imager au moins un objet cible faisant partie dudit canal d'intérêt (5).

**11.** Procédé selon l'une quelconque des revendications précédentes 1 à 10, dans lequel la réponse de canal, h, dudit canal d'intérêt (5) est calculée en continu en temps réel.

**12.** Appareil configuré pour fournir une réponse de canal, h, d'un canal d'intérêt (5) sur la base d'un signal modifié selon le canal reçu par ledit appareil du canal d'intérêt (5) en réponse à un signal de détection prédéterminé transmis par ledit canal d'intérêt (5) audit appareil, ledit appareil comprenant une unité de traitement (3) adaptée pour effectuer différentes estimations de canal de premier ordre sur le signal modifié selon le canal reçu pour calculer des premières estimations de canal de premier ordre, $\hat{h}$, de ladite réponse de canal, h, dudit canal d'intérêt (5) sans procéder à une inversion de matrice, et adaptée pour combiner les premières estimations de canal de premier ordre, $\hat{h}$, calculées pour calculer la réponse de canal, h, dudit canal d'intérêt (5), une combinaison linéaire des premières estimations de canal de premier ordre, $\hat{h}$, étant calculée en utilisant des facteurs de pondération, a, pour fournir la réponse de canal, h, dudit canal d'intérêt (5).

**13.** Appareil selon la revendication 12, dans lequel le signal de détection comprend un signal radar, un signal sonar, un signal laser, un signal magnétique, un signal thermique et/ou un signal de communication.

Fig. 1

Fig. 2

Fig. 3

Estimate channel response
by CIM i

Update estimates

Estimate $\hat{h}_{CIMi}$

If
converged?

no

yes

Compute
$\alpha_{CIMi} =$
$\exp\left(-\left\|y - x\,\hat{h}_{CIMi}\right\|_2^2\right)$

Weighted
estimates from
other CIMs

Weighted estimate
$\alpha_{CIMi}\,\hat{h}_{CIMi}$

$\sum\limits_{i=1}^{N} \alpha_{CIMs}$

Final channel/ Target estimate

Fig. 4

from iteration i-1

forgetting factor β

Iterative channel
inversion method
update (iteration i)

g(.)

$\hat{h}_i$

$\hat{h}_j$

Estimates from
other methods

7-i

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2444100 A